# EUROPEAN PATENT SPECIFICATION

(11) **EP 1 307 860 B1**
(45) Date of publication and mention of the grant of the patent: **06.10.2004**
(21) Application number: 01947461.8
(22) Date of filing: 18.07.2001
(51) Int. Cl.: G07F 7/08, H04M 17/00

(54) **PAYING FOR SERVICES USING ELECTRONIC CASH**
ZAHLEN FÜR DIENSTLEISTUNGEN UNTER VERWENDUNG VON ELEKTRONISCHEM GELD
PAIEMENT DE SERVICES AVEC DE L'ARGENT ELECTRONIQUE

(30) Priority: 09.08.2000 GB 0019419
(43) Date of publication of application: 07.05.2003
(73) Proprietor: Telefonaktiebolaget LM Ericsson (publ), 164 83 Stockholm (SE)
(72) Inventor: LUNDSTRÖM, Johan, FIN-21600 Pargas (FI); NILSSON, Patrik, 52134 Herzogenrath (DE)
(74) Representative: Lind, Robert
(86) International application number: PCT/EP2001/008337
(87) International publication number: WO 2002/013149

(56) References cited:
- EP-A- 0 831 438
- WO-A-96/25828
- WO-A-97/40616
- WO-A-98/22915
- WO-A-98/33343
- FR-A- 2 752 123
- US-A- 5 930 777
- SHAW I: "CASH ON DELIVERY - MOBILE CONSUMER MANAGEMENT GOES BACK TO BASICS" IEE COLLOQUIUM ON MOBILE COMMUNICATIONS TOWARDS THE YEAR 2000,IEE, LONDON,GB, 1994, pages 6/1-6/6, XP000606423

## Description

### Field of the Invention

The present invention relates to paying for services using electronic cash and more particularly to a method and apparatus for transporting electronic cash between telephone subscribers and telecommunications networks.

### Background to the Invention

The use of electronic cash or "e-cash" is expected to become commonplace in the near future. Users of electronic cash will possess an electronic wallet (for example a small card having embedded memory chips) which can be charged with e-cash via a bank ATM, via a telephone connection, over the Internet, or using any other suitable mechanism. The e-cash itself is no more than a series of digits, although in a form which provides for guaranteed security.

Paying for telephone calls and other telephone services with e-cash will be especially convenient. Indeed the use of pre-paid services in mobile telephone networks, where mobile users top up a credit balance using scratch cards, credit/debit cards, etc, represents a significant step in this direction. It is envisaged that the SIM card used in mobile telephones to store subscriber and other data, may be used as an electronic wallet to store e-cash specifically for paying for telephone services and may be "charged" in banks, kiosks, and the like.

WO96/25828 describes a mobile terminal for use in a cellular telephone network and which comprises an application for storing and using electronic cash. Cash can be transferred to a third party via a wireless link.

### Summary of the Invention

It is envisaged that electronic cash will be transferred between a user terminal, for example a mobile terminal or fixed line telephone, and a service provider using a bearer connection established to carry user data. For example, electronic cash could be incorporated into a data packet and transmitted using the GPRS service of GSM. This kind of solution is suitable for services using the telecommunication network as a data transfer channel, as long as the services are not telecommunication services offered by the network itself. A WAP based service is an example of such service to which this solution might be applied.

However, the use of bearer connections to carry electronic cash has a number of disadvantages particularly where the service provider is the telecommunications network itself, e.g. the service to be charged for is the data transfer capability offered by the network. In particular, in a circuit switched GSM network, a problem arises because bearer connections for user data are transparent to the telecommunications network and cannot be terminated in the exchange (e.g. MSC) which is responsible for charging for a telecommunications service. It is also not acceptable to use a part of the bandwidth that the user is paying for, to transfer e-cash to pay for the service. Whilst a solution is to have dedicated circuit switched connections for payments, this solution would waste a lot of bandwidth in the network.

In a GPRS network, bearer connections can without significant waste of bandwidth be used to carry e-cash from a terminal to a charging control system of the telecommunication network. Again however the same problem arises: the subscriber normally has to pay for the bearer which means that the subscriber would have to pay for the e-cash transfer itself. Even where this is acceptable, the bearer cannot be established before the network is certain that it can be paid for. However, until the bearer is established, it is impossible to confirm payment.

According to the present invention there is provided a method of using electronic cash to pay for services obtained from or via a telecommunications network providing a packet switched service, the method comprising:
storing electronic cash in a memory of or coupled to user equipment;
characterised by
establishing a bearer between the user equipment and a charging control node of the network using the packet switched service, the bearer being dedicated to the transfer of electronic cash, and the network operator not charging for data sent over the bearer; and
whenever a chargeable service is initiated, extracting electronic cash from said memory, sending the extracted cash to the charging control node of the telecommunications network over the dedicated bearer, and establishing a further bearer for carrying data associated with the initiated chargeable service.

As embodiments of the invention make use of a dedicated bearer to transport electronic cash between the user equipment (UE) and the network, and this dedicated bearer can be established free of charge to the user, the process of paying for services does not represent a cost which must be born by the user.

Preferably, said bearer is established (automatically) when the UE is turned on, and is terminated when the UE is turned off. In this way, the bearer is always available for transferring electronic cash when the UE is in use.

Preferably, upon receipt of electronic cash from the UE, the charging control node sends an authorisation signal to the node which is responsible for providing or facilitating the service to the UE. In the case of a GSM network with GPRS enhancement, this node may be an MSC (where the initiated service is a circuit-switched call) or an SGSN (where the initiated service is a packet-switched call). More preferably, said authorisation signal is sent using the CAP protocol.

Preferably, said packet switched service is the GPRS service, although it will be appreciated that it may be an equivalent service. The bearer established between the UE and the charging control node comprises a PDP context established between the UE and a GGSN of the GPRS network. The link between the GGSN and the charging control node may be provided by an IP network.

### Brief Description of the Drawings

Figure 1 illustrates a telecommunications system including a mobile telecommunications network;
Figure 2 is a signalling diagram illustrating certain signalling occurring between a mobile terminal of the system of Figure 1 and the telecommunications network.
Figure 3 illustrates schematically a GSM network with GPRS enhancement;
Figure 4 illustrates the flow of signalling in the network of Figure 3 required for transferring electronic cash; and
Figure 5 illustrates the flow of signalling associated with the establishment of a PDP context.

### Detailed Description of Certain Embodiments

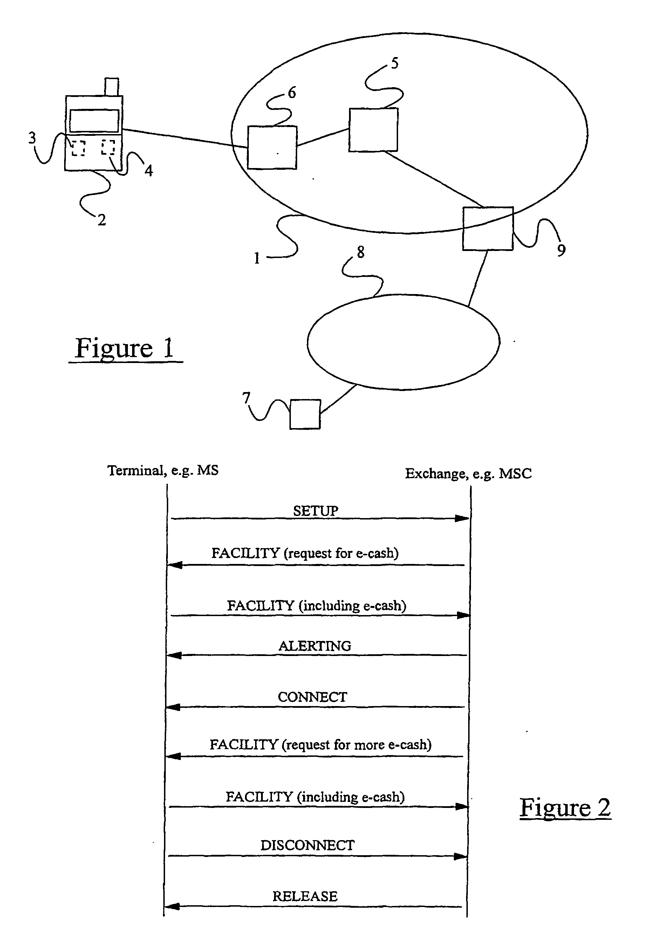

A description of various mechanisms for using and transferring electronic cash will now be presented. The description given in relation to Figures 1 and 2 are provided only by way of background information.

There is illustrated in Figure 1 a mobile, cellular telecommunications network 1 which uses the Global System for Mobile communications (GSM) protocols. A single mobile terminal 2 belonging to a user is illustrated. The mobile terminal 2 has a slot for receiving a Subscriber Identity Module (SIM) card 3 which is arranged to perform the functions of a conventional SIM card, i.e. recording the identity of a home network, the subscriber's identity, etc. In addition, the SIM card 3 has a set of memory locations reserved for storing electronic cash ("e-cash"). E-cash may be loaded into the SIM card for example at a newsagents kiosk, network operator's premises, or the like, and may be of a known type, e.g. Mondex™, Proton™, or Avant™. Typically, the electronic cash is stored in an encrypted form. For the purpose of the following illustration, it is assumed that the user does not have a credit based subscription with the operator of the mobile network 2.

GSM uses a protocol known as DTAP to control, for example, the establishment and release of connections, and for mobility management.

In the event that the user of the mobile terminal 2 initiates a call by dialling a number and pressing the "Send" key, a call SETUP message is generated by the processor of the mobile terminal 3 in accordance with the DTAP signalling protocol. The SETUP message includes the calling terminal's identity, the called party's number, and any other information necessary to connect the call. The SETUP message is received by a peer DTAP layer at the MSC 5 where a charging function calculates, based on a predefined tariff, the cost of an initial call period (of reasonable duration). The MSC then sends a FACILITY message, including a FACILITY information element containing USSD information identifying a request for e-cash, to the mobile terminal 2. In response to receipt of this FACILITY message, the mobile terminal 2 may extract the requested sum of e-cash from the e-cash memory. The terminal then includes the e-cash as USSD data in a FACILITY message and sends this to the MSC 5.

The e-cash is passed to a charging function operating at the MSC 5, which decrypts and authenticates the cash, and verifies its sufficiency. Assuming that the results of these checks are positive, the charging function notifies the call control function of the MSC 5. The MSC 5 then proceeds to establish the requested connection, e.g. by sending an Initial Address Message (IAM) to a Gateway MSC which is connected to a PSTN. In the event that either the e-cash sent by the mobile terminal 2 cannot be authenticated or is not sufficient, the charging function causes the MSC to return an appropriate notification to the mobile terminal, e.g. requesting the user to send an additional e-cash payment.

Assuming that a connection is established via the MSC 5, additional e-cash payments may be requested during the call by the charging function, for example because the initial payment has been or is about to be consumed. Again, the request and any further payment are communicated to the mobile terminal 2 and to the MSC 5 using DTAP messages, e.g. FACILITY messages. Upon termination of the call, any remaining e-cash paid to the network may be refunded to the mobile terminal using a DTAP message, e.g. by incorporating the cash into a RELEASE message. If it is impossible to refund the e-cash, the MSC (or a node associated with the MSC) may store the refund in a subscriber database. The next time a call is established by the same subscriber, there is no need to fetch e-cash at the start of the call, since the MSC can obtain e-cash from the subscriber database.

The complete signalling sequence between the mobile terminal 2 and the MSC 5 is further illustrated in the signalling diagram of Figure 2.

It will be appreciated that in order to exchange e-cash between nodes of a telecommunication system, use may be made of signalling messages and signalling channels. For example, e-cash may be incorporated into ISUP signalling messages such as the APM and PRI messages mentioned above. This mechanism may be useful, for example, for interconnect billing between operators, or in cases where a part of the retail billing is carried out by a transit network operator. However, the implementation would require a modification to the relevant current application level standards.

These procedures are not only applicable to mobile terminals and networks, but can also be employed in fixed line terminals and PSTN networks. For example, where a telephone terminal is connected to a local exchange of a PSTN via an ISDN line, e-cash may be sent from the terminal to the exchange, and vice versa, using ISDN signalling messages. More particularly, DSS1 signalling messages may be used, these being sent over the ISDN D channel. Similarly, the invention may be employed where a computer terminal is connected to a telephone line.

It will be appreciated by the person of skill in the art that various modifications may be made to the above described procedures. For example, in the embodiment described with reference to Figures 1 and 2, the charging function which decrypts, authenticates, and collects the electronic cash is located at the MSC 5. In some systems the charging function may be located elsewhere in the network, or even outside the network with the MSC acting as a protocol adapter and relay node. In a UMTS network, the signalling messages may be terminated at a RNC or GSN node, with the charging function being located at that node or at some other node.

The described procedures are also applicable to real time charging mechanisms making use of a charging control node (CCN). The CCN will communicate with nodes which generate charging event data (e.g. an MSC of a GSM network) using the CAP protocol. Messages containing e-cash, e.g. SMS messages, are sent to the CCN.

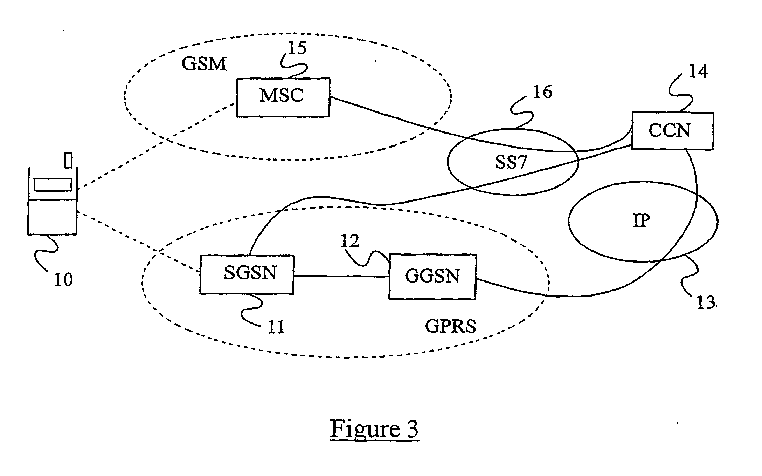

There will now be described an alternative mechanism for transferring electronic cash from a mobile terminal or user equipment (UE) to a charging control node (CCN) of a mobile telecommunications network and which embodies the present invention. More particularly, and as illustrated in Figure 3, the network is a GSM network enhanced to provide the packet switched service known as general packet radio service (GPRS). Figure 3 illustrates an example UE 10, as well as an MSC 15 used to set up circuit switched calls, and a serving GPRS support node (SGSN) 11 and gateway GPRS support node (GGSN) 12 used to set up packet switched calls. The GGSN 12 is coupled to an IP network 13. When a UE wishes to use the GPRS service, it must first establish a PDP context with the GGSN 12. Thereafter, packet data (i.e. IP data) can be exchanged between the UE 10 and a correspondent host coupled to the IP network, via the GGSN 12. The CCN 14 is coupled to the same IP network 13 as the GGSN 12 and is operated by the operator of the mobile network or the operator of some other mobile network.

The CCN 14 a centralised, real-time charging node which provides an access and service independent platform for applications implementing charging, credit and spending control. The main components of the CCN 14 will be a centralised rating function and an account database. From an operator's point of view, the CCN 14 can be used for charging (prepaid or postpaid) GSM and GPRS services. It is noted that in future 3G networks the CCN 14 will be used for charging for UMTS access (and additionally for accessing any type of WAP or Internet content-based services).

As the CCN 14 offers a centralised rating and charging point, the CCN can be used as a "cash machine" where electronic cash is used to pay for services offered by and via a mobile network. Whilst IP based protocols to transfer electronic cash already exist, these protocols do not address the following issues:
- How to find a suitable communication channel for the transfer of electronic cash? One possibility is to use the same bearer (i.e. PDP context) which the user has established for application use, e.g. web-surfing; multimedia connections, etc. However, this solution breaks one of the main rules of telecommunication charging, that it must not be possible to establish a payload bearer before the network has verified that the initiator can be charged. In addition it can only be employed when the service being used is a packet service.
- How to find a suitable communication channel which allows the transfer of electronic cash, without charging the user for the transfer (transfer of electronic cash is a form of network control signalling which should not be charged for)? If the same bearer is used for payload and electronic cash transfer, all information transferred on that bearer will be charged for (if volume based charging is applied).
- When/how to trigger the transfer of electronic cash, as the CCN is not necessarily aware of the IP address of the UE when the user is using a packet service?

The solution to the problems mentioned above is to establish a dedicated, free-of-charge, PDP context for transferring electronic cash. Before the UE 10 is allowed to start any type of chargeable activities, the UE 10 must start a session to transfer electronic cash to the CCN 14. Once the session is established, the CCN 14 will allow the UE 10 to establish payload bearers, e.g. for Web-surfing.

When the user first turns on the UE 10, signalling is exchanged between the UE 10 and the SGSN 11, and between the UE 10 and the MSC 11 to attach the UE 10 to both of these nodes. Immediately after this initial attachment phase is completed, the UE 10 sends a request to the GPRS network to establish a PDP context for access payments (this may happen automatically). The UE 10 sends to the GPRS network an access point name (APN) which identifies the CCN 14. When the request to set-up the PDP context is received at the SGSN 11 of the GPRS network, the SGSN 11 will contact the CCN 14 using CAP to seek authorisation. The CCN 14 recognises that the request relates to the setting-up of a PDP context for charging purposes, and notifies the SGSN 11 that set-up should proceed. Once the PDP context is established, the UE 10 must send a "start" message to the CCN 14 to inform the CCN 14 of the IP address allocated to the UE 10, and towards which the electronic cash transfer protocol shall be used. Another important purpose of the start message is to identify the user (e.g. using IMSI, E.164 number, etc), so that the CCN 14 can relate the charging session with the chargeable activities of the user.

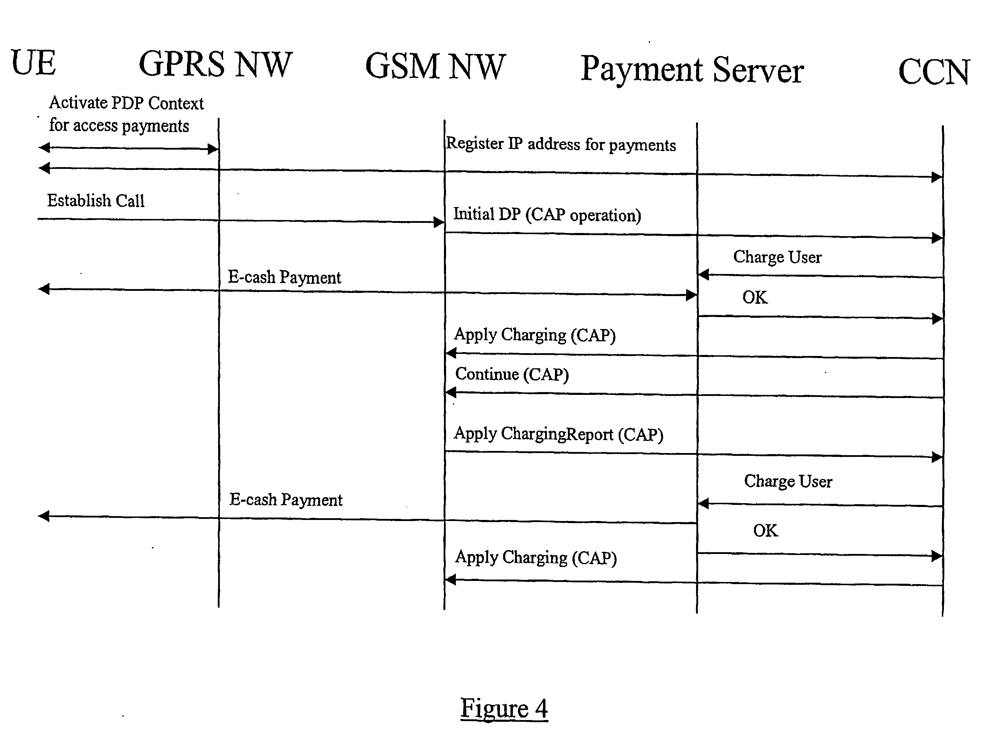

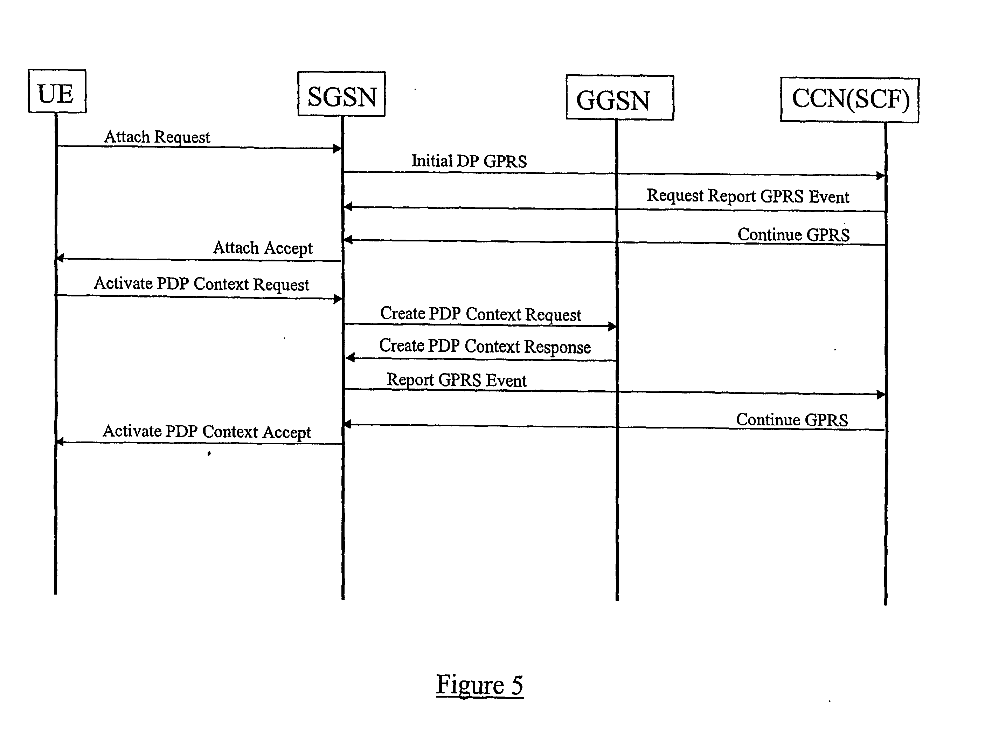

Figure 4 illustrates the signalling flow between the UE 10 and the network in the case where the user wishes to establish a circuit switched (voice) call using the GSM network. The first step following attachment of the UE 10 to the GSM and GPRS networks, is the activation of a PDP context for access payments. This stage is illustrated in more detail in Figure 5. The UE then registers itself (and it's IP address) with the CCN. After the PDP context has been established, the UE 10 sends a request to the GSM network (MSC) to establish the voice call. The GSM network then sends an InitialDP message (CAP operation) to the CCN 14 via an SS7 signalling network 16, causing the CCN 14 to instruct a payment server (which is integrated into the CCN) to obtain an electronic cash payment from the UE 10 over the established PDP context. The CCN returns CAP Apply Charging and Continue messages to the GSM network via the SS7 network 16. The GSM network continues with the set-up of the circuit switched connection. The GSM network may subsequently send Apply Charging Report CAP messages to the CCN 14 to cause further electronic cash requests to be sent to the UE 10 from the payment server. Assuming that cash is returned to the payment server, the connection is maintained.

The protocol described here does not require standardisation, since the termination of the protocol will be easy to handle in different terminal manufacturers' products due to open execution environments. For example, most terminals in the future will probably support JAVA Virtual Machines, which makes it possible to provide electronic cash purse software, written in JAVA, together with a CCN delivery. The CCN customer can make this software available, free of charge, to the end users.

The mechanism described above allows users to pay, using an electronic cash card, for many different services (access, content, etc) accessible via a GPRS access network.

The same electronic cash card can also be used for other purposes, e.g. paying for parking, vending machines, road tolls, etc. The mechanism will allow operators to become payment brokers for many services which today are charged directly to the users. Another scenario involves the operators outsourcing their billing process to banks or credit card companies, who are the issuers of e-cash.

One of the strengths of using e-cash as described is that operator-independent service providers can offer for example content based services and charge for usage using e-cash. In this case, the dedicated payment PDP context is of course not used, but rather the same PDP context as is used for accessing the used service is employed for transmitting e-cash. The benefits to operators are that their billing costs will decrease, and chargeable traffic in the network will increase.

## Claims

1. A method of using electronic cash to pay for services obtained from or via a telecommunications network providing a packet switched service, the method comprising:
storing electronic cash in a memory of or coupled to user equipment;
**characterised by**
establishing a bearer between the user equipment and a charging control node of the network using the packet switched service, the bearer being dedicated to the transfer of electronic cash, and the network operator not charging for data sent over the bearer; and
whenever a chargeable service is initiated, extracting electronic cash from said memory, sending the extracted cash to the charging control node of the telecommunications network over the dedicated bearer, and establishing a further bearer for carrying data associated with the initiated chargeable service.

2. A method according to claim 1, wherein said free-of-charge bearer is established when the user equipment is turned on, and is terminated when the user equipment is turned off so that the free-of-charge bearer is always available for transferring electronic cash when the user equipment is in use.

3. A method according to claim 1 or 2, wherein, upon receipt of electronic cash from the user equipment, the charging control node sends an authorisation signal to the node which is responsible for providing or facilitating the service to the user equipment.

4. A method according to any one of claims 1 to 3, wherein the telecommunications network is a mobile telecommunications network and the user equipment is a mobile wireless terminal.

5. A method according to claim 4, wherein the node which receives the authorisation is a Mobile Service Centre or Serving GPRS Support Node.

6. A method according to any one of the preceding claims, wherein said packet switched service is the General Packet Radio Service, GPRS, service and the bearer established between the user equipment and the charging control node comprises a PDP context established between the user equipment and a Gateway GPRS Support Node of the GPRS network.

7. A method according to any one of the preceding claims and comprising consuming the electronic cash within a node of the network to pay for services obtained by the user equipment and, upon termination of a service, either refunding unused electronic cash to the user equipment or retaining unused cash as future credit for the user equipment.

## Patentansprüche

1. Verfahren zur Verwendung von elektronischem Geld, um für Dienste zu bezahlen, die von einem oder über ein Telekommunikationsnetzwerk, das einen paketvermittelten Dienst bereitstellt, bezogen werden, wobei das Verfahren die folgenden Schritte umfaßt:
Speichern von elektronischem Geld in einem Speicher des Anwenders oder in einem Speicher, der mit Anwendergerät gekoppelt ist;
**gekennzeichnet durch** die Schritte:
Einrichten eines Trägers zwischen dem Anwendergerät und einem Verrechnungssteuerknoten des Netzwerks unter Verwendung des paketvermittelten Dienstes, wobei der Träger für den Transfer des elektronischen Geldes bestimmt ist und der Netzwerkbetreiber über den Träger gesendete Daten nicht berechnet; und
immer wenn ein kostenpflichtiger Dienst aufgerufen wird, Entnehmen von elektronischem Geld aus dem Speicher, Senden des entnommenen Geldes an den Verrechnungssteuerknoten des Telekommunikationsnetzwerks über den dafür bestimmten Träger und Einrichten eines weiteren Trägers zum Transport von Daten, die dem aufgerufenen kostenpflichtigen Dienst zugeordnet sind.

2. Verfahren nach Anspruch 1, wobei der kostenlose Träger eingerichtet wird, wenn das Anwendergerät eingeschaltet wird, und beendet wird, wenn das Anwendergerät ausgeschaltet wird, so daß der kostenlose Träger immer zum Transfer von elektronischem Geld verfügbar ist, wenn das Anwendergerät in Gebrauch ist.

3. Verfahren nach Anspruch 1 oder 2, wobei der Verrechnungssteuerknoten nach Empfang von elektronischem Geld vom Anwendergerät ein Autorisierungssignal an den Knoten sendet, der für die Bereitstellung oder Vermittlung des Dienstes an das Anwendergerät verantwortlich ist.

4. Verfahren nach einem der Ansprüche 1 bis 3, wobei das Telekommunikationsnetzwerk ein mobiles Telekommunikationsnetzwerk ist und das Anwendergerät ein mobiles drahtloses Endgerät ist.

5. Verfahren nach Anspruch 4, wobei der Knoten, der die Autorisierung empfängt, ein mobiles Vermittlungszentrum oder ein Serving-GPRS-Unterstützungsknoten ist.

6. Verfahren nach einem der vorhergehenden Ansprüche, wobei der paketvermittelte Dienst der Allgemeine Paket-Funkdienst GPRS ist und der zwischen dem Anwendergerät und dem Verrechnungssteuerknoten eingerichtete Träger einen PDP-Kontext umfaßt, der zwischen dem Anwendergerät und einem GPRS-Gateway-Unterstützungsknoten des GPRS-Netzwerks eingerichtet ist.

7. Verfahren nach einem der vorhergehenden Ansprüche, mit den folgenden Schritten: Verbrauchen des elektronischen Geldes in einem Knoten des Netzwerks, um für durch das Anwendergerät bezogene Dienste zu bezahlen, und nach Beendigung eines Dienstes entweder Zurückerstatten von nichtverbrauchtem elektronischen Geld an das Anwendergerät oder Zurückbehalten von nichtverbrauchtem Geld als zukünftigen Kredit für das Anwendergerät.

## Revendications

1. Procédé d'utilisation d'argent électronique pour payer des services obtenus à partir de ou via un réseau de télécommunication fournissant un service commuté par paquets, le procédé comprenant:
le stockage d'argent électronique dans une mémoire d'un équipement d'utilisateur ou couplée à un équipement d'utilisateur,
**caractérisé par**:
l'établissement d'un circuit support entre l'équipement d'utilisateur et un noeud de commande d'imputation du réseau en utilisant le service commuté par paquets, le circuit support étant dédié au transfert d'argent électronique, et l'opérateur de réseau ne réalisant pas une imputation pour des données envoyées sur le circuit support; et
chaque fois qu'un service imputable est initié, l'extraction d'argent électronique à partir de ladite mémoire, l'envoi de l'argent extrait sur le noeud de commande d'imputation du réseau de télécommunication sur le circuit support dédié et l'établissement d'un circuit support supplémentaire pour transporter des données associées au service imputable initié.

2. Procédé selon la revendication 1, dans lequel ledit circuit support exempt d'imputation est établi lorsque l'équipement d'utilisateur est mis en route et il y est mis fin lorsque l'équipement d'utilisateur est coupé de telle sorte que le circuit support exempt d'imputation soit toujours disponible pour transférer de l'argent électronique lorsque l'équipement d'utilisateur est en utilisation.

3. Procédé selon la revendication 1 ou 2, dans lequel, suite à la réception d'argent électronique en provenance de l'équipement d'utilisateur, le noeud de commande d'imputation envoie un signal d'autorisation sur le noeud qui est responsable de la fourniture du service ou de l'action consistant à faciliter ce service sur l'équipement d'utilisateur.

4. Procédé selon l'une quelconque des revendications 1 à 3, dans lequel le réseau de télécommunication est un réseau de télécommunication mobile et l'équipement d'utilisateur est un terminal sans fil mobile.

5. Procédé selon la revendication 4, dans lequel le noeud qui reçoit l'autorisation est un centre de service ou de desserte de mobile ou un noeud de support GPRS de service ou de desserte.

6. Procédé selon l'une quelconque des revendications précédentes, dans lequel ledit service commuté par paquets est le service radio par paquets général ou GPRS et le circuit support qui est établi entre l'équipement d'utilisateur et le noeud de commande d'imputation comprend un contexte PDP qui est établi entre l'équipement d'utilisateur et un noeud de support GPRS de passerelle du réseau GPRS.

7. Procédé selon l'une quelconque des revendications précédentes et comprenant la consommation d'argent électronique à l'intérieur d'un noeud du réseau pour payer des services qui sont obtenus par l'équipement d'utilisateur et, suite à la fin du service, soit le retour, en tant que fonds, de l'argent électronique inutilisé sur l'équipement d'utilisateur, soit la retenue de l'argent inutilisé en tant que crédit futur pour l'équipement d'utilisateur.
